Europäisches Patentamt

(19) European Patent Office

Office européen des brevets

(11) Numéro de publication: **0 264 312**
**B1**

(12) **FASCICULE DE BREVET EUROPEEN**

(45) Date de publication du fascicule du brevet:
18.04.90

(51) Int. Cl.⁴: **F02B 19/08**, F02B 19/14

(21) Numéro de dépôt: 87402071.2

(22) Date de dépôt: 16.09.87

(54) Moteur à allumage par compression comportant une préchambre à bougie inclinée.

(30) Priorité: 02.10.86 FR 8613766

(43) Date de publication de la demande:
20.04.88 Bulletin 88/16

(45) Mention de la délivrance du brevet:
18.04.90 Bulletin 90/16

(84) Etats contractants désignés:
DE GB IT SE

(56) Documents cités:
EP-A- 0 154 718
DE-A- 3 539 128
DE-B- 1 242 040
FR-A- 2 360 755

MTZ MOTORTECHNISCHE ZEITSCHRIFT,
vol. 44, no. 6, juin 1983, pages 215-222, Schwäbisch-
Gmünd, DE; G. SCHMIDT et al.: "Optimierung von
Verbrennung und Ladungswechsel am neuen
BMW-Turbodieselmotor"

(73) Titulaire: AUTOMOBILES PEUGEOT, 75, avenue de la
Grande Armée, F-75116 Paris(FR)
Titulaire: AUTOMOBILES CITROEN, 62 Boulevard
Victor-Hugo, F-92200 Neuilly-sur-Seine(FR)

(72) Inventeur: Advenier, Pierre, 35, rue Belliard,
F-75018 Paris(FR)
Inventeur: Marez, Patrice, 3, rue Alsace Lorraine,
F-92250 La Garenne-Colombes(FR)

(74) Mandataire: Kohn, Philippe et al, c/o CABINET
LAVOIX 2, place d'Estienne d'Orves, F-75441 Paris
Cédex 09(FR)

## Description

La présente invention concerne les moteurs Diesel équipés d'une préchambre dite "de Ricardo" et plus particulièrement la position de la bougie de préchauffage dans cette préchambre.

Un moteur Diesel à préchambre de Ricardo se compose essentiellement d'un bloc-cylindres au-dessus duquel se trouve placée une culasse dans laquelle est ménagée une préchambre approximativement sphérique. Cette préchambre est reliée par un canal à une chambre principale qui est délimitée par la tête du piston, le cylindre et la partie adjacente de la culasse (qui est en vis-à-vis du cylindre). Ce canal de préférence tangentiel communique avec la chambre principale et avec la préchambre par des embouchures. Dans la préchambre se trouvent placés un injecteur le plus souvent disposé à l'opposé de l'embouchure du canal et une bougie qui permet d'assurer l'inflammation du mélange combustible au démarrage du moteur particulièrement lorsque ce dernier est froid.

Comme il est bien connu, la qualité du fonctionnement d'un moteur Diesel à préchambre est essentiellement liée à la manière dont le mélange de l'air comprimé par le piston et du combustible pulvérisé par l'injecteur se fait et à la manière dont les gaz enflammés passent dans la chambre principale.

En particulier le fluide se déplaçant dans la préchambre est animé d'un mouvement tourbillonnaire selon un axe passant pratiquement par le centre de la cavité de la chambre. La bougie de préchauffage faisant saillie dans la préchambre constitue un véritable obstacle aérodynamique qui perturbe le champ de vitesse de l'air refoulé par le piston au voisinage de l'injecteur ; le jet de carburant est donc perturbé ce qui nuit à la combustion ainsi qu'indiqué précédemment.

Pour remédier aux inconvénients liés à la présence indispensable de la bougie on a proposé de modifier la position de cette dernière en agissant soit sur sa localisation, soit sur sa profondeur de pénétration en vue de dégager le débouché du canal de transfert dans la préchambre.

On a par exemple reporté la bougie en aval de l'injecteur, l'air refoulé par le piston rencontrant ainsi la bougie après son passage devant l'injecteur.

On a aussi remplacé la bougie unique relativement grosse par plusieurs petites bougies situées de part et d'autre du plan de symétrie de la préchambre.

Ou bien encore on a disposé l'axe longitudinal de la bougie dans un plan parallèle au plan de symétrie de la préchambre.

Ces solutions ont pour inconvénients de ne pas offrir un bon compromis entre la surface mouillée de la bougie dans la préchambre, la perturbation aérodynamique et la position de l'injecteur. En effet, dans le cas du report de la bougie, il est nécessaire de déplacer l'injecteur vers l'amont par rapport à sa position initiale optimale. Si l'on utilise plusieurs petites bougies, on obtient une surface mouillée de la bougie dans la préchambre plus faible que celle offerte par une bougie unique de plus grandes dimensions, ce qui peut donc conduire à une dégradation de la qualité du démarrage. La disposition de la bougie dans un plan parallèle au plan de symétrie conduit également à une surface mouillée réduite ou à une modification importante de la culasse.

Le document EP-A-0154718 décrit et représente un moteur à allumage par compression comportant au moins un cylindre et une préchambre de turbulence où débouche un canal de transfert qui relie la préchambre au cylindre, cette préchambre présentant un plan de symétrie et comportant une bougie de préchauffage qui y fait saillie et qui est centrée sur un axe qui forme un angle avec ce plan de symétrie.

La bougie y est inclinée de manière à ce que son extrémité située à l'intérieur de la préchambre vienne lécher le jet de combustible.

L'agencement de la bougie présenté dans ce document a pour inconvénients, d'une part de constituer un obstacle qui désorganise le mouvement tourbillonnaire du fluide à l'intérieur de la préchambre, et d'autre part de nécessiter la réalisation de nouveaux moules de fonderie, les moules utilisés pour des chambres à bougie non inclinée ne pouvant être modifiés aisément pour permettre le montage d'une bougie inclinée vers l'intérieur.

Afin de remédier à ces inconvénients, l'invention propose un moteur du type de celui décrit dans le document EP-A-0154718 caractérisé en ce que la bougie est placée sur son axe de manière à ce que son extrémité située à l'intérieur de la préchambre constitue le point le plus éloigné du plan de symétrie.

Conformément à ce nouvel agencement, la bougie est placée près de la paroi de la préchambre et ne perturbe pas le tourbillon de fluide. Cette inclinaison ne nuit pas au bon démarrage du moteur car il n'est en fait pas nécessaire que la bougie lèche le jet de combustible. En effet, prises dans le tourbillon, les gouttelettes de combustible se dispersent très rapidement dans tout le volume de la préchambre.

En outre, on ne rencontre pas avec cette solution les problèmes de fonderie que l'on rencontre avec la solution antérieure, par rapport à un état de la technique dans lequel la bougie n'est pas inclinée.

D'autres caractéristiques de l'invention apparaîtront au cours de la description qui va suivre faite en référant aux dessins annexés donnés uniquement à titre d'exemple et dans lesquels:

- la Fig.1 est une vue partielle schématique en coupe d'un moteur Diesel selon la technique antérieure ;
- la Fig.2 est une vue partielle, à échelle différente d'une projection orthogonale de la préchambre de la Fig.1 sur un plan perpendiculaire à l'axe de translation du piston ; et
- la Fig.3 est une vue partielle, à échelle diffé-te d'une projection sur le plan diamétral de l_ chambre, montrant la position de la bougie selc. vention.

Les moteurs Diesel, en particulier ceux équipés d'une préchambre de Ricardo, étant bien connus dans la technique on ne décrira que ce qui se rapporte à l'invention et qui est nécessaire à sa compréhension.

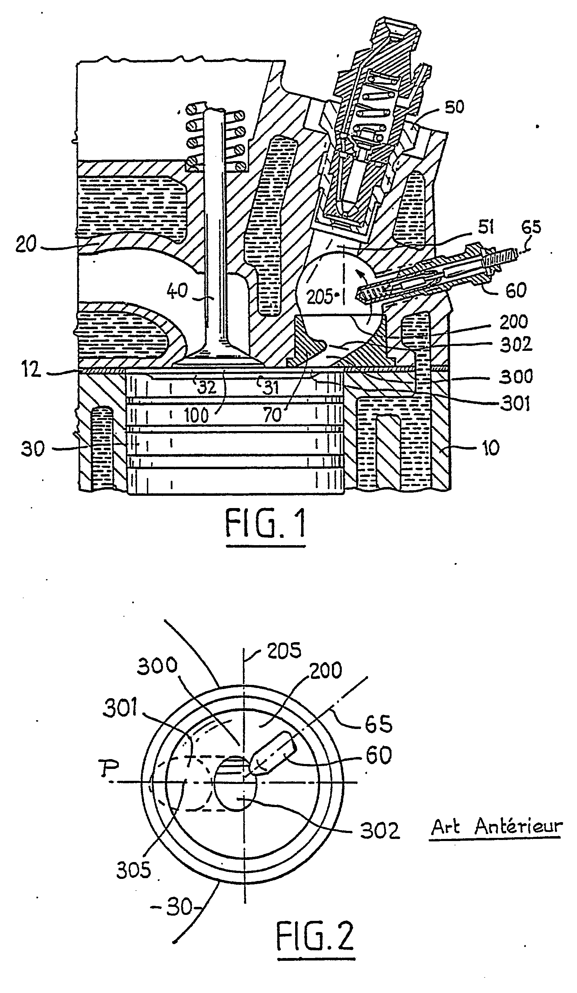

On a représenté sur la Fig.1, un mode de réalisation d'un moteur Diesel à chambre de Ricardo selon la technique antérieure représentée dans le document EP-A-0154 718.

Comme on le voit, sur cette coupe schématique partielle, le moteur comprend un bloc-cylindres 10 sur lequel se trouve placée une culasse 20 qui en est séparée par un joint de culasse 12 thermoplastique. Le bloc-cylindres est équipé d'un piston 30 dont la tête 31 est pourvue d'un évidement 32. Ce moteur est aussi équipé d'une soupape 40. d'un injecteur 50 et d'une bougie de préchauffage 60 utilisée pour le démarrage lorsque le moteur est froid. Comme il est classique, la culasse 20 est munie d'un élément 70 qui délimite avec cette dernière une préchambre 200. Dans cette préchambre 200 débouchent l'injecteur 50 et la bougie 60.

La tête du piston, le cylindre et la partie de la culasse qui leur fait face délimitent une chambre de combustion principale 100.

Cette chambre de combustion principale 100 et la préchambre 200 sont mises en communication par un canal de transfert 300 dont l'extrémité 301 débouche dans la chambre principale 100 et dont l'extrémité 302 débouche dans la préchambre 200.

La préchambre 200 se présente généralement comme une cavité délimitée par une partie supérieure approximativement sphérique raccordée à une partie inférieure approximativement tronconique, comme cela apparaît à l'examen du dessin. Elle présente un plan de symétrie P dans lequel est situé l'axe 65 de la bougie.

La Fig.2 permet de voir la configuration longitudinale de l'axe 305 du canal de transfert 300 et les positions respectives qu'occupent les embouchures 301, 302 et la bougie 60 d'axe incliné 65 dans la préchambre 200 et par rapport au plan P de symétrie de la préchambre. Le canal de transfert 300 arrivant tangentiellement dans la préchambre 200, le fluide qui s'y déplace est animé de mouvements tourbillonnaires selon un axe 205 qui passe pratiquement par le centre de la partie sphérique de la préchambre, axe qui est perpendiculaire au plan de la Fig.1. L'examen des Fig.1 et 2 permet de comprendre immédiatement que la bougie 60 qui fait saillie dans la cavité de la préchambre 200 s'y comporte comme un corps étranger dont l'intrusion perturbe l'aérodynamique et le champ de vitesse au voisinage de l'injecteur ; le jet 51 de carburant pulvérisé est grandement perturbé ce qui nuit à la combustion, comme on l'a indiqué.

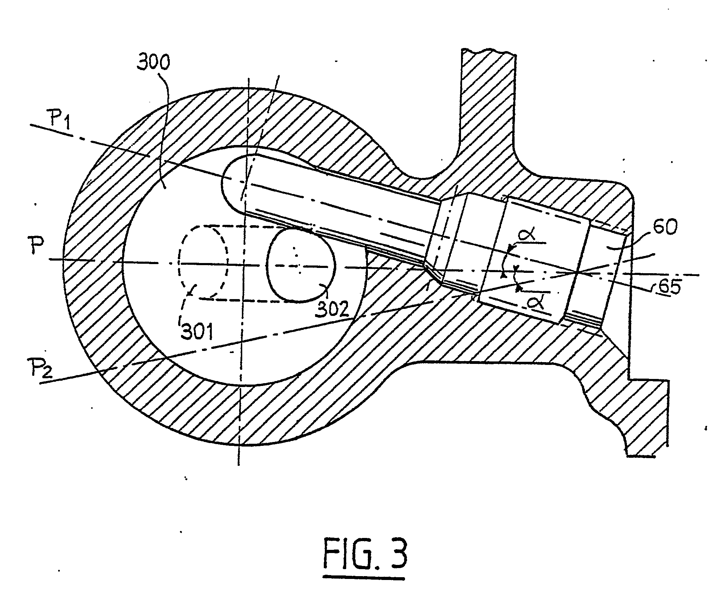

Pour remédier à cet inconvénient, on place la bougie dans la préchambre dans un plan P₁ ou P₂ qui est incliné d'un angle par rapport au plan de symétrie P de la préchambre (voir Fig.3). L'inclinaison de la bougie étant telle que, si l'on considère une projection orthogonale sur un plan perpendiculaire à l'axe du cylindre du moteur (par exemple plan diamétral de la préchambre), la trace de la bougie est complètement en dehors de la trace du débouché 302 du canal de transfert 300 dans la préchambre 200 (voir Fig. 3). La bougie est agencée de manière que son extrémité située à l'intérieur de la préchambre constitue le point le plus éloigné du plan de symétrie. Comme dans le cas de la Fig. 2, le plan de symétrie P considéré est un plan parallèle à l'axe du piston et qui contient l'axe longitudinal 305 du canal de transfert 300.

La position de la bougie dans le plan P₁, ou P₂, dont les traces sont clairement dessinées Fig.3, est déterminée de manière à avoir le meilleur compromis entre surface mouillée, perturbation aérodynamique et position de l'injecteur.

L'invention permet d'organiser une bonne turbulence dans la préchambre tout en conservant une qualité satisfaisante de démarrage du moteur. Par ailleurs, cette meilleure organisation de la turbulence permet de réduire l'intensité de cette dernière et par là de perméabiliser le canal de transfert, c'est-à-dire d'y rendre plus facile l'écoulement du fluide, ce qui contribue à diminuer notablement la consommation spécifique. De plus, il n'y a pas lieu de prévoir d'investissement particulier pour l'usinage de la culasse, il suffit simplement de modifier l'orientation relative des outils par rapport à la pièce sur la machine usinant la culasse sans aucun autre changement.

Grâce à l'invention, on voit qu'il est non seulement possible d'obtenir un moteur fiable, mais de diminuer la consommation spécifique en carburant tout en satisfaisant aux normes anti-pollution de plus en plus sévères car les émissions de fumées et d'hydrocarbures imbrûlés sont notablement diminuées, sans qu'il soit nécessaire de recourir à des dispositifs auxiliaires complexes, coûteux et souvent mal adaptés aux moteurs automobiles.

## Revendications

1. Moteur à allumage par compression comportant au moins un cylindre (30) et une préchambre (200) de turbulence où débouche un canal de transfert (300) qui relie la préchambre (200) au cylindre (30), cette préchambre présentant un plan de symétrie (P) et comportant une bougie de préchauffage (60) qui y fait saillie, et qui est centrée sur un axe qui forme un angle avec ce plan de symétrie (P), caractérisé en ce que la bougie (60) est placée sur son axe (65) de manière à ce que son extrémité située à l'intérieur de la préchambre constitue le point le plus éloigné du plan de symétrie (P).

2. Moteur selon la revendication 1, caractérisé en ce que dans une projection orthogonale sur un plan perpendiculaire à l'axe du cylindre (30), la trace de la bougie (60) est en dehors de la trace de l'embouchure (302) du canal de transfert (300) dans la préchambre (200).

## Patentansprüche

1. Motor mit Kompressionszündung mit wenigstens einem Zylinder (30) und einer Wirbel-Vorkammer (200), wo ein Verbindungskanal (300) mündet, der die Vorkammer (200) mit dem Zylinder (30) verbindet, wobei die Vorkammer eine Symmetrieebene (P) aufweist und eine Vorheizkerze (60) aufweist, die über ihn vorspringt, und die auf einer Achse zentriert ist, die einen Winkel mit der Symmetrieebe-

ne (P) bildet, dadurch gekennzeichnet, daß die Kerze (60) auf ihrer Achse (65) derart angeordnet ist, daß ihr Ende, das im Inneren der Vorkammer angeordnet ist, den Punkt bildet, der am weitesten von der Symmetrieebene (P) entfernt ist.

2. Motor nach Anspruch 1, dadurch gekennzeichnet, daß in einer senkrechten Projektion auf eine Ebene, die senkrecht zur Achse des Zylinders (30) verläuft, die Spur der Kerze (60) außerhalb der Spur der Mündung (302) des Verbindunsskanals (300) in der Vorkammer (200) verläuft.

## Claims

1. A diesel engine comprising at least one cylinder (30) and a prechamber (200) into which a transfer duct (300) discharges which connects the prechamber (200) to the cylinder (30), the chamber having a plane of symmetry (P) and comprising a glow plug (60) which projects thereinto and is centred on an axis forming an angle with said plane of symmetry (P), characterized in that the plug (60) is so disposed on its axis (65) that its end situated inside the prechamber forms the point most distant from the plane of symmetry (P).

2. An engine according to claim 1, characterized in that in a projection orthogonal to a plane perpendicular to the axis of the cylinder (30) the trace of the plug (60) is outside the trace of the outlet (302) of the transfer duct (300) into the prechamber (200).

FIG.1

FIG.2

Art Antérieur

## FIG. 3